# EUROPEAN PATENT APPLICATION

(11) **EP 1 818 514 A1**
(43) Date of publication of application: **15.08.2007**
(21) Application number: 07002043.3
(22) Date of filing: 31.01.2007
(51) Int. Cl.: F01L 3/08

(54) **Sealing apparatus**

(30) Priority: 14.02.2006 JP 2006036717
(71) Applicant: Carl Freudenberg KG, 69469 Weinheim (DE)
(72) Inventor: Numata, Tomoyuki, c/o Nok Corporation, Fudushima-shi, Fukushima 960-1193 (JP)

(57) **Abstract**

The invention provides a sealing apparatus in which a first valve stem seal installed to a lubricating oil chamber side of a valve guide does not fall away from the valve guide even by a suction air pressurized to a high pressure in a port side, and a seal lip of the valve stem seal is not deformed. In a sealing apparatus (1) provided with a first valve stem seal (30) installed to an end portion in a lubricating oil chamber (12) side of a valve guide (14), and a second valve stem seal (40) installed to an end portion in a port (11) side, the second valve stem seal (40) is provided with a reinforcing ring (41) and a seal portion (44) in which a leading end portion of a seal lip (43) brought into slidable contact with a valve stem (20) is pinched toward the port (11) side, and is installed to an outer peripheral side of the valve guide (14).

## Description

### BACKGROUND OF THE INVENTION

### Field of the Invention

The present invention relates to a sealing apparatus, for example, used in a valve stem in an air supply and exhaust mechanism of an engine of a motor vehicle and a general industrial machinery.

### Description of the Related Art

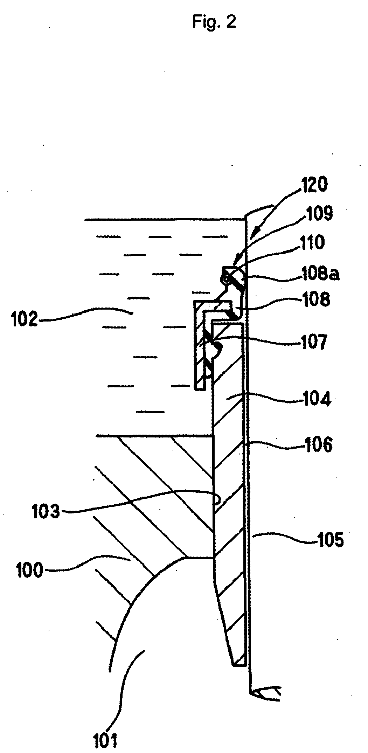

Conventionally, as a sealing apparatus used in a valve stem attached to an air supply and exhaust mechanism of a motor vehicle, for example, there has been known a sealing apparatus 120 as shown in Fig. 2.

In Fig. 2, reference numeral 100 denotes a cylinder head having a port 101. The cylinder head 100 is provided with a lubricating oil chamber 102 at an opposite position to the port 101 side in an axial direction, and a through hole 103 passing through the port 101 from the lubricating oil chamber 102 is formed in an inner peripheral side. A valve guide 104 is attached to the through hole 103, a valve stem 105 reciprocating in an axial direction is inserted to an inner peripheral side of the valve guide 104, and an annular space 106 is formed between an inner peripheral surface of the valve guide 104 and an outer peripheral surface of the valve stem 105.

A valve stem seal 109 is installed to the lubricating oil chamber 102 of the valve guide 104. The valve stem seal 109 serves as a sealing apparatus 120 constituted by a reinforcing ring 107 made of a metal and a seal portion 108 made of a rubber-like elastic body. The seal portion 108 is provided with a seal lip 108a extending toward the lubricating oil chamber 102 side and sliding on an outer peripheral surface of the valve stem 105 in a close contact manner, and a garter spring 110 reinforcing a tracking performance of the seal lip 108a in a diametrical direction is installed to an outer peripheral side of the seal lip 108a. In this case, the seal lip 108a has a predetermined fastening margin with respect to the valve stem 105, and controls an amount at which a lubricating oil within the lubricating oil chamber 102 leaks into the annular space 106.

However, since the port 101 comes to a high pressure in accordance with a high output of an engine in recent years, an intake air pressurized to the high pressure makes an intrusion into the annular space 106 from the port 101 side. Accordingly, a great back pressure is applied to the valve stem seal 109, whereby there is a risk that the seal lip 108a of the valve stem seal 109 is deformed, or the valve stem seal 109 falls away from the valve guide 104.

Further, the leaking amount of the lubricating oil in the lubricating oil chamber 102 controlled by the valve stem seal 109 into the annular space 106 becomes unstable due to a fluctuation of the back pressure, whereby there is a risk that that a seizure, an early abrasion or the like between the valve guide 104 and the valve stem 105 is generated. Further, a solid content such as a soot or the like generated by a combustion of a fuel or the like makes an intrusion into the annular space 106 so as to prevent the lubricating oil from being supplied, whereby there is a risk that the seizure, the early abrasion or the like between the valve guide 104 and the valve stem 105 is generated

In this case, the following patent document 1 describes a structure in which a valve stem seal is provided in both of a lubricating oil chamber side and a port side of a valve guide, and a second lubricating oil other than a lubricating oil in a lubricating oil chamber is held in an annular space formed between an inner peripheral surface of the valve guide and an outer peripheral surface of the valve stem. Further, the following patent documents 2 and 3 describe a structure in which a valve stem seal is provided in an oil port side of a valve guide. However, the inventions described in the documents mentioned above are different from the present invention in the purpose, the structure and the like.
Patent Document 1: Japanese Unexamined Patent Publication No. 10-009400 Patent Document 2: Japanese Unexamined Utility Model Publication No. 59-117808
Patent Document 3: Japanese Unexamined Utility Model Publication No. 04-117108

### SUMMARY OF THE INVENTION

The present invention is made for solving the problem in the prior art mentioned above, and an object of the present invention is to prevent a valve stem seal installed to a lubricating oil chamber side of a valve guide from falling away from the valve guide even by an intake air pressurized to a high pressure in a port side, and prevent a seal lip of the valve stem seal from being deformed.

Further, the other object of the present invention is to prevent a leaking amount of a lubricating oil in a lubricating oil chamber controlled by a valve stem seal installed to a lubricating oil chamber side of a valve guide to an annular space from being dispersed even if a pressure in a port side is fluctuated, thereby preventing a seizure, an early abrasion or the like between the valve guide and the valve stem from being generated.

Further, the other object is to prevent a solid content such as a soot or the like generated by a combustion of a fuel or the like from making an intrusion into an annular space from a port side, due to a high pressure of the port side, thereby preventing the seizure, the early abrasion or the like between the valve guide and the valve stem from being generated.

In order to achieve the object mentioned above, in accordance with a first aspect of the present invention, there is provided a sealing apparatus installed for sealing an annular space formed between a valve guide attached to a housing having a port, and a valve stem reciprocating on an inner periphery of the valve guide, comprising: a first valve stem seal controlling an amount at which a lubricating oil accommodated in a lubricating oil chamber provided in an opposite side in an axial direction to the port leaks into the annular space and installed to an end portion of the lubricating oil chamber side of the valve guide; and a second valve stem seal installed to a port side end portion of the valve guide, characterized in that the second valve stem seal is provided with a reinforcing ring and a seal portion in which a leading end portion of a seal lip brought into slidable contact with the valve stem is pinched toward a port side, and is installed to an outer peripheral side of the valve guide. The present invention achieves the following effects.

In other words, in the sealing apparatus in accordance with the first aspect of the present invention provided with the structure mentioned above, since it is possible to seal by the second valve stem seal installed to the port side end portion of the valve guide even in the case that the inner side of the port comes to a high pressure, a back pressure is not applied to the first valve stem seal, and it is possible to prevent the first valve stem seal from falling away. Further, it is possible to prevent the seal lip of the first valve stem seal from being deformed, and it is possible to obtain a stable seal performance.

Further, since it is possible to hold a seal performance of the first valve stem seal, it is possible to reduce the dispersion of the leaking amount of the lubricating oil in the lubricating oil chamber to the annular space so as to stabilize, thereby preventing the seizure, the early abrasion or the like between the valve guide and the valve stem. Further, it is possible to prevent a foreign material such as soot or the like from making an intrusion into the annular space between the inner peripheral surface of the valve guide and the annular space of the valve stem by the second valve stem seal, thereby preventing the seizure, the early abrasion or the like between the valve guide and the valve stem.

### BRIEF DESCRIPTION OF THE DRAWINGS

Fig. 1 is a partly cross sectional view of a sealing apparatus in accordance with the present invention; and
Fig. 2 is a partly cross sectional view of a sealing apparatus in accordance with a prior art.

### DESCRIPTION OF THE PREFERRED EMBODIMENT

A description will be given below of a preferable embodiment in accordance with the present invention with reference to the accompanying drawings.

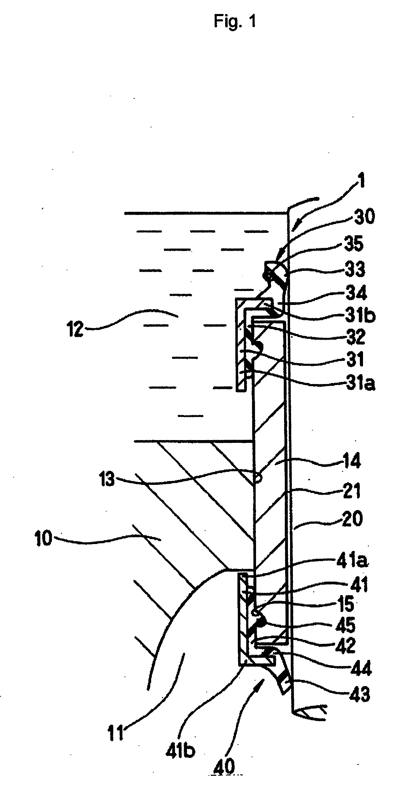

Fig. 1 is a partly cross sectional view of a sealing apparatus 1 used in a valve stem attached to an air supply and exhaust mechanism of a motor vehicle.

In Fig. 1, reference numeral 10 denotes a cylinder head serving as a housing having a port 11. The cylinder head 10 is provided with a lubricating oil chamber 12 at an opposite position to the port 11 side in an axial direction, and a through hole 13 passing through the port 11 from the lubricating oil chamber 12 is formed in an inner peripheral side. A valve guide 14 is attached to the through hole 13, a valve stem 20 reciprocating in an axial direction is inserted to an inner peripheral side of the valve guide 14, and an annular space 21 is formed between an inner peripheral surface of the valve guide 14 and an outer peripheral surface of the valve stem 20.

In order to seal the annular space 21, a first valve stem seal 30 is installed to the lubricating oil chamber 12 side of the valve guide 14, and a second valve stem seal 40 is installed to the port 11 side, which serve as the sealing apparatus 1.

The first valve stem seal 30 has a metal first reinforcing ring 31 constituted by a first cylinder portion 31 a extending in an axial direction and a first flange portion 31b extending in an inner diameter direction from an end portion of the first cylinder portion 31a close to the lubricating oil chamber 12, and a rubber elastic first seal portion 34 constituted by a first fixed sealing portion 32 adhered to the first reinforcing ring 31 and a first seal lip 33 integrally formed with the first fixed sealing portion 32. The first seal lip 33 extends toward the lubricating oil chamber 12 side and slides in such a manner as to be brought into close contact with an outer peripheral surface of the valve stem 20 with a fastening margin. Further, a garter spring 35 applying a tension force in a diametrical direction of the first seal lip 33 is installed to an outer peripheral side of the first seal lip 33. Accordingly, the first seal lip 33 of the first valve stem seal 30 controls an amount at which the lubricating oil in the lubricating oil chamber 12 leaks into the annular space 21.

The second valve stem seal 40 has a metal second reinforcing ring 41 constituted by a second cylinder portion 41a extending in an axial direction and a second flange portion 41b extending in an inner diameter direction from an end portion of the second cylinder portion 41a close to the port 11, and a rubber elastic second seal portion 44 constituted by a second fixed sealing portion 42 adhered to the second reinforcing ring 41 and a second seal lip 43 integrally formed with the second fixed sealing portion 42. An annular convex portion 45 protruding to an inner diameter side is formed in an inner peripheral surface of the second fixed sealing portion 42, and is structured such as to be fitted to an annular concave portion 15 formed in an outer peripheral surface of the valve guide 14 close to the port 11 side. Further, the second seal lip 43 extends toward the port 11 side in a diameter reduced manner little by little, and slides in such a manner as to be brought into close contact with an outer peripheral surface of the valve stem 20 with a fastening margin.

Accordingly, in the structure mentioned above, since an intake air pressurized to a high pressure in the port 11 side acts in such a manner as to press the second seal lip 43 of the second valve stem seal 40 extending so as to be reduced diameter little by little toward the port 11 side against the outer peripheral surface of the valve stem 20, the second valve stem seal 40 can seal the high-pressure intake air in the port 11 side which is going to make an intrusion into the annular space 21. Therefore, it is possible to prevent the back pressure from being applied to the first valve stem seal 30 installed to the outer peripheral end portion of the valve guide 14 close to the lubricating oil chamber 12 side, and it is possible to prevent the first valve stem seal 30 from falling away from the valve guide 14. Further, it is possible to prevent the first seal lip 33 of the first valve stem seal 30 from being deformed, and it is possible to keep a stable seal performance.

Further, since the first seal lip 33 of the first valve stem seal 30 is not deformed, the seal performance becomes stable, and it is possible to reduce the dispersion of the leaking amount of the lubricating oil in the lubricating oil chamber 12 to the annular space 21, whereby it is possible to prevent a seizure, an early abrasion or the like between the valve guide 14 and the valve stem 20 which form the annular space 21.

Further, since the second valve stem seal 40 can seal an intrusion of a foreign material such as a soot or the like into the annular space 21 from the port 11 side, it is possible to prevent the seizure, the early abrasion or the like between the valve guide 14 and the valve stem 20.

The second valve stem seal 40 is used to seal the annular space 21 between valve stem 20 and valve guide 14 against exhaust gas or combustion gas. Therefore the second seal lip 43 extends in a diameter reduced manner little by little toward the port 11 side.

## Claims

1. A sealing apparatus for sealing an annular space between a valve stem and a valve guide against exhaust gas or combustion gas, comprising a first valve stem seal (30) and a second valve stem seal (40), **characterized in that** the second valve stem seal (40) is provided with a reinforcing ring (41) and a seal portion (44) in which a leading end portion of a seal lip (43) is pinched toward a side.

2. A sealing apparatus according to claim 1, **characterized in that** the seal lip (43) extends in a diameter reduced manner little by little.

3. A sealing apparatus according to claims 1 or 2, **characterized in that** the seal lip (43) comprises a fastening margin.

4. A sealing apparatus according to claims 1 to 3, **characterized in that** the seal portion (44) comprises a fixed sealing portion (42) adhered to the reinforcing ring (41).

5. A sealing apparatus according to claim 4, **characterized in that** the seal lip (43) is integrally formed with the fixed sealing portion (42).

6. A sealing apparatus according to claims 4 or 5, **characterized in that** an annular convex portion (45) protruding to an inner diameter side is formed in an peripheral surface of the fixed sealing portion (42).

7. An arrangement comprising a sealing apparatus according to one of the claims 1 to 6, whereas the sealing apparatus is installed for sealing an annular space (21) formed between a valve guide (14) attached to a housing having a port (11), and a valve stem (20) reciprocating on an inner periphery of the valve guide (14), whereas the sealing apparatus comprises a first valve stem seal (30) controlling an amount at which a lubricating oil accommodated in a lubricating oil chamber (12) provided in an opposite side in an axial direction to the port (11) leaks into the annular space (21), and installed to an end portion of the lubricating oil chamber side of the valve guide (14), and a second valve stem seal (40) installed to a port side end portion of the valve guide (14), whereas the second valve stem seal (40) is provided with a reinforcing ring (41) and a seal portion (44) in which a leading end portion of a seal lip (43) brought into slidable contact with the valve stem (20) is pinched toward a port side, and is installed to an outer peripheral side of the valve guide (14).
